# EUROPÄISCHE PATENTSCHRIFT

(11) **EP 1 736 275 B1**
(45) Veröffentlichungstag und Bekanntmachung des Hinweises auf die Patenterteilung: **02.07.2008**
(21) Anmeldenummer: 06006471.4
(22) Anmeldetag: 29.03.2006
(51) Int. Cl.: B23Q 5/40

(54) **Achsführung einer Arbeitsspindel einer Werkzeugmaschine**
Linear guiding of the working spindle of a machine tool
Guidage linéaire de la broche de travail d'une machine-outil

(30) Priorität: 27.05.2005 DE 102005024521
(43) Veröffentlichungstag der Anmeldung: 27.12.2006
(73) Patentinhaber: KERN Micro- und Feinwerktechnik GmbH & Co. KG, 82418 Murnau-Westried (DE)
(72) Erfinder: Alschweig, Ekkehard, 82418 Murnau-Westried (DE)
(74) Vertreter: Flosdorff, Jürgen

(56) Entgegenhaltungen:
- EP-A- 0 286 710
- EP-A- 0 534 585
- DE-A1-0102004 024 77
- US-A- 3 263 530
- US-A- 5 090 489
- US-A- 5 195 853

## Beschreibung

Die Erfindung betrifft eine Achsführung einer Werkzeugmaschine nach dem Oberbegriff von Anspruch 1 (siehe, z.B., US-5 090 489-A).

Derartige Führungen an Werkzeugmaschinenachsen sind z.B. aus Drehmaschinen als sogenannte Pinolenführungen oder als z-Achsführungen mit Wälzlagerführungen bekannt.

Der vorliegenden Erfindung liegt die Aufgabe zugrunde, eine Achsführung einer Werkzeugmaschine der eingangs genannten Art so zu verbessern, daß sie vor aus dem Gewindetrieb abtropfenden Öl geschützt ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, daß die Längsantriebseinrichtung im Inneren des rohrförmigen Achskörpers antriebsmäßig mit diesem verbunden ist, wobei vorgesehen ist, daß der rohrförmige Achskörper über hydrostatische Lager in seinem Achsträger geführt ist. Hierdurch werden die Längskräfte aus dem Antrieb praktisch ohne Biegemoment in den rohrförmigen Achskörper eingeleitet und können von der außenliegenden Achsführung stabil aufgenommen werden, so daß praktisch eine reibungsfreie Achsbewegung erfolgt.

Die Sicherung des rohrförmigen Achskörpers gegen Verdrehung erfolgt nach einem weiteren Gesichtspunkt der Erfindung mit Hilfe einer Führungsschiene, die in axialer Richtung außen an dem Achskörper befestigt ist und verschieblich in einer Nut des Achsträgers sitzt. Dabei stützt sich die Führungsschiene bevorzugt an hydrostatischen Lagern in den Nutwänden des Achsträgers ab, womit die gesamte Achsführungsanordnung reibungsfrei auf einem Ölfilm schwimmend läuft.

Die Längsantriebseinrichtung weist einen Gewindetrieb auf, bei dem es sich um einen wälzgelagerten Gewindetrieb handeln kann. Bevorzugt ist jedoch ein hydrostatischer Gewindetrieb vorgesehen.

Der Gewindetrieb hat eine Gewindestange, die mit einer Mutter bevorzugt unter Zwischenschaltung von hydrostatischen Lagertaschen zusammenwirkt, die somit einen hydrostatischen Gewindetrieb bilden.

Die Mutter des Gewindetriebs ist innerhalb des rohrförmigen Achskörpers befestigt und zwar bevorzugt an einem Zwischenboden, der neben der Befestigungsstelle für die Mutter eine Aussparung enthält, die mit der in dem rohrförmigen Achskörper angeordneten Gewindespindel fluchtet.

Die Gewindestange des Gewindetriebs steht in Eingriff mit der innerhalb des Achskörpers fixierten Mutter, so daß beim Drehen der Gewindestange in die eine oder andere Drehrichtung der Achskörper entweder vorgeschoben oder zurückgezogen wird.

Weiter ist vorgesehen, daß unterhalb der Mutter des Gewindetriebs ein feststehendes Rohr zum Einfahren der Gewindestange angeordnet ist. Das feststehende Rohr hat einen etwas größeren Durchmesser als die Gewindestange und ist mit einem Boden versehen, so daß das Rohr austretendes Öl auffangen kann. Durch ein verschließbares Loch in der Seitenwand des Rohres nahe dem Boden kann das Öl abgepumpt werden.

Zum Auffangen von austretendem Öl ist ferner vorgesehen, daß die Gewindestange von einem Faltenbalg umgeben ist. Ein solcher Faltenbalg ― mit entsprechend größerem Durchmesser ― umfaßt auch den aus dem Achsträger austretenden Abschnitt des rohrförmigen Achskörpers.

Nach einem wesentlichen Gesichtspunkt der Erfindung greift nicht nur die Längsantriebseinrichtung ins Innere des rohrförmigen Achskörpers ein, sondern auch die Arbeitsspindel ist zusammen mit ihrer Drehantriebseinrichtung innerhalb des rohrförmigen Achskörpers angeordnet, wobei lediglich ihr Kopfabschnitt aus dem Achskörper herausragt. Die Arbeitsspindel ist an einem unteren Flansch des Achskörpers befestigt und leicht austauschbar gehalten, so daß Arbeitsspindeln verschiedener Durchmesser mit einem geringen Arbeitsaufwand befestigt werden können.

Wie oben erwähnt befindet sich über der Arbeitsspindel in dem die Mutter des Gewindetriebs haltenden Zwischenboden eine Aussparung, durch die die elektrischen Anschlüsse für die Arbeitsspindel hindurchgeführt werden können.

Nach einem weiteren wesentlichen Gesichtspunkt der Erfindung kann ein Laser in der Weise mit der Achsführung der Werkzeugmaschine zusammenwirken, daß sein Laserstrahl anstelle der Arbeitsspindel, die zuvor entfernt wird, zur Bearbeitung des Werkstücks verwendet wird, indem der Laserstrahl an entsprechender Stelle durch den Achskörper geleitet wird.

Bei der erfindungsgemäßen Achsführung ist eine gegenüber dem Stand der Technik erhöhte Präzision und Steifigkeit der Achsbewegung sichergestellt.

Weitere Einzelheiten der Erfindung ergeben sich aus der nachfolgenden Beschreibung einer bevorzugten Ausführungsform der Achsführung sowie anhand der Zeichnung. Dabei zeigen:
- Figur 1: eine Seitenansicht einer Ausführungsform einer Achsführung,
- Figur 2: einen Längsschnitt entlang der Linie A-A durch die Achsführung gemäß Figur 1, und
- Figur 3: einen Horizontalschnitt entlang der Linie B-B in Figur 1.

Die Achsführung enthält einen rohrförmigen Achskörper 1, der in seiner axialen Richtung verschieblich in einem Achsträger 2 angeordnet ist. Der Achskörper 1 ist dabei durch zwei ringförmige, hydrostatische Lager 3 gelagert, die jeweils aus vier in dem Achsträger 2 ausgebildeten Taschen bestehen, deren Spaltmaß 11µm beträgt.

Die Längsantriebseinrichtung des rohrförmigen Achsträgers 1 umfaßt einen Elektromotor 4, der über einen Zahnriemen 5 mit einem Zahnrad 6 verbunden ist, das seinerseits fest mit einer Gewindestange 7 in Verbindung steht. Diese Gewindestange 7 greift in eine Mutter 8 ein, die an einem Zwischenboden 9 im Inneren des Achskörpers 1 befestigt ist. Auf der von der Gewindestange 7 abgewandten Seite der Mutter 8 ist ein feststehendes Rohr 10 angebracht, das mit einem Boden 11 und einem seitlichen Loch 12 versehen ist. Die Gewindestange 7 fährt in das Rohr 10 ein, das austretendes Öl auffängt, das durch die verschließbare Öffnung 12 abgepumpt werden kann.

Die Längsachse der Gewindestange 7 verläuft parallel zur Längsachse des Achskörpers 1.

Die Gewindestange 7 ist von einem Faltenbalg 13 umgeben, der sich auf einem Anschlußteil 14 abstützt. Auch der aus dem Achsträger 2 austretende Abschnitt des Achskörpers 1 ist von einem Faltenbalg 15 umgeben, der den Achskörper 1 vor Verschmutzung schützt.

Innerhalb des Achskörpers 1 ist ferner eine Arbeitsspindel 16 mit ihrem Drehantrieb untergebracht, und zwar an einem in den Figuren unteren Flansch 18 derart befestigt, daß die Arbeitsspindel 16 leicht gegen eine andere Arbeitsspindel austauschbar ist.

Zur Verdrehsicherung ist an der Außenseite des Achskörpers 1 eine querschnittlich rechteckige Führungsschiene 19 befestigt, die in Längsrichtung verschieblich in einer entsprechend geformten Nut des Achsträgers 2 sitzt. Die Führungsschiene 19 stützt sich dabei auf hydrostatischen Lagern 20 in den Nutwänden ab.

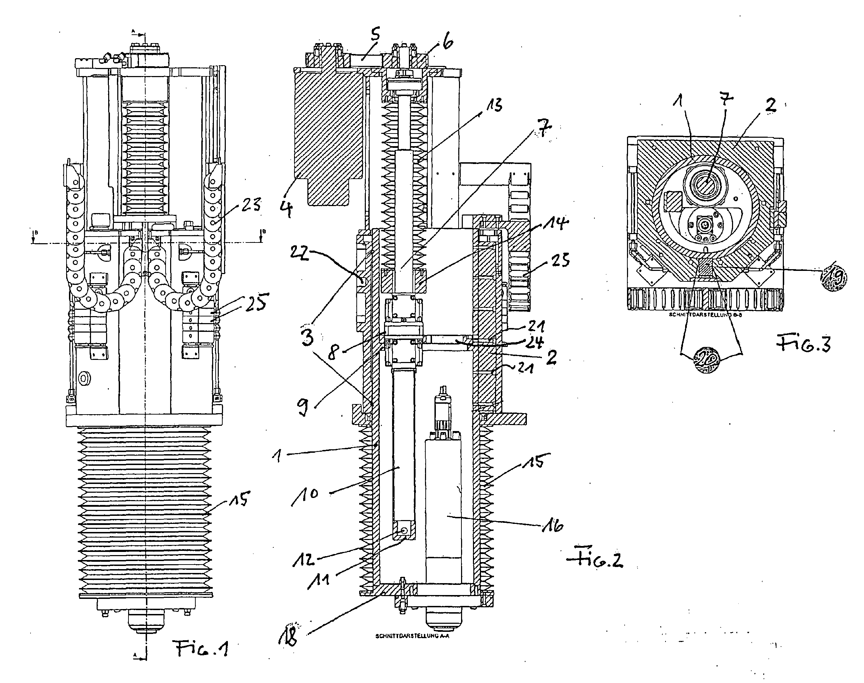

Figur 2 zeigt Zuführungen 21 in dem Achsträger 2, die zu den hydrostatischen Lagern führen. An der gegenüberliegenden Seite in der Darstellung der Figur 2 enthält der Achsträger eine Anordnung mit einer Bohrung 22 zum Befestigen des Achsträgers an einer nicht dargestellten Halterung.

Die Figuren 1 und 2 zeigen zudem eine Schleppkette 23, in die Kabel eingelegt werden, die u.a. durch eine Aussparung 24 in dem Zwischenboden 9 hindurch zur Drehantriebseinrichtung der Arbeitsspindel 16 führen. Mit dem Bezugszeichen 25 sind in Figur 1 Regler für den Taschendruck der hydrostatischen Lager bezeichnet.

## Patentansprüche

1. Achsführung einer Werkzeugmaschine, bevorzugt zur zerspanenden Herstellung von Bauteilen, mit einem rohrförmigen Achskörper (1), der in seiner axialen Richtung über hydrostatische Lager (3) in einem Achsträger (2) geführt ist und eine Arbeitsspindel (16) hält, und mit einer Längsantriebseinrichtung, die im Inneren des rohrförmigen Achskörpers (1) antriebsmäßig mit diesem verbunden ist, wobei die Längsantriebseinrichtung einen Gewindetrieb aufweist, der eine Gewindestange (7) aufweist, die mit einer Mutter (8) zusammenwirkt,
**dadurch gekennzeichnet,**
**dass** unterhalb der Mutter (8) ein feststehendes Rohr (10) zum Einfahren der Gewindestange (7) angeordnet ist, wobei das Rohr (10) einen Boden (11) und eine verschließbare Öffnung (12) aufweist, durch die in dem Rohr (10) aufgefangenes Öl abpumpbar ist.

2. Achsführung nach Anspruch 1,
**dadurch gekennzeichnet,**
**dass** die Mutter (8) des Gewindetriebs innerhalb des rohrförmigen Achskörpers (1) befestigt ist.

3. Achsführung nach Anspruch 1,
**dadurch gekennzeichnet,**
**dass** die Arbeitsspindel (16) zusammen mit ihrer Drehantriebseinrichtung (17) innerhalb des rohrförmigen Achskörpers (1) angeordnet ist.

4. Achsführung nach Anspruch 1 oder 3,
**dadurch gekennzeichnet,**
**dass** der rohrförmige Achskörper (1) einen mit der Arbeitsspindel (16) in axialer Richtung fluchtenden Freiraum enthält, derart, dass nach Entfernen der Arbeitsspindel (16) ein Laserstrahl durch den Achskörper (1) zur Bearbeitung eines Werkstücks geleitet werden kann.

5. Achsführung nach Anspruch 1,
**dadurch gekennzeichnet,**
**dass** eine Führungsschiene (19) außen an dem Achskörper (1) in dessen Längsrichtung befestigt ist, die in einer Nut des Achsträgers (2) sitzt.

## Claims

1. A shaft guide for a machine tool, preferably for the production of components by machining, with a tubular shaft body (1), which is guided in its axial direction by means of hydrostatic bearings (3) in a shaft support (2) and holds a working spindle (16), and a longitudinal drive device, which, in the interior of the tubular shaft body (1), is drive connected to the latter, wherein the longitudinal drive device has a screw drive, which includes a threaded rod (7), which cooperates with a nut (8), **characterised in that** disposed below the nut (8) there is a fixed tube (10) into which the threaded rod (7) may be moved, wherein the tube (10) has a base (11) and a closable opening (12), through which oil collected in the tube (10) may be pumped away.

2. A shaft guide as claimed in Claim 1, **characterised in that** the nut (8) of the screw drive is fastened within the tubular shaft body (1).

3. A shaft guide as claimed in Claim 1, **characterised in that** the working spindle (16) is arranged together with its rotary drive device (17) within the tubular shaft body (1).

4. A shaft guide as claimed in Claim 1 or 2, **characterised in that** the tubular shaft body (1) includes a cavity aligned with the working spindle (16) in the axial direction such that after removal of the working spindle (16) a laser beam can be passed through the shaft body (1) to machine a workpiece.

5. A shaft guide as claimed in Claim 1, **characterised in that** a guide rail (19) is secured externally to the shaft body (1) in its longitudinal direction, which is located in a groove in the shaft support (2).

## Revendications

1. Guidage d'axe d'une machine-outil, de préférence pour la fabrication par enlèvement de copeaux de composants, avec un corps d'axe tubulaire (1), qui est guidé dans sa direction axiale par des paliers hydrostatiques (3) dans un support d'axe (2) et qui retient une broche de travail (16), et avec une installation d'entraînement longitudinal qui est reliée à l'intérieur du corps d'axe tubulaire (1), quant à son entraînement, à celui-ci, où l'installation d'entraînement longitudinal présente un moyen d'entraînement à filetage qui présente une tige filetée (7) qui coopère avec un écrou (8),
**caractérisé en ce**
**qu'**est disposé en dessous de l'écrou (8) un tuyau fixe (10) pour l'insertion de la tige filetée (7), où le tuyau (10) présente un fond (11) et une ouverture (12) pouvant être fermée par laquelle l'huile recueillie dans le tuyau (10) peut être évacuée par pompage.

2. Guidage d'axe selon la revendication 1,
**caractérisé en ce que**
l'écrou (8) du moyen d'entraînement à filetage est fixé à l'intérieur du corps d'axe tubulaire (1).

3. Guidage d'axe selon la revendication 1,
**caractérisé en ce que**
la broche de travail (16) conjointement avec son installation d'entraînement en rotation (17) est disposée à l'intérieur du corps d'axe tubulaire (1).

4. Guidage d'axe selon la revendication 1 ou 3,
**caractérisé en ce que**
le corps d'axe tubulaire (1) comporte un espace libre aligné avec la broche de travail (16) dans la direction axiale de telle sorte qu'après le retrait de la broche de travail (16), un faisceau laser peut être guidé à travers le corps d'axe (1) pour l'usinage d'une pièce.

5. Guidage d'axe selon la revendication 1,
**caractérisé en ce**
**qu'**un rail de guidage (19) est fixé à l'extérieur au corps d'axe (1) dans sa direction longitudinale, qui repose dans une rainure du corps d'axe (2).
